# EUROPEAN PATENT APPLICATION

(11) **EP 4 822 947 A1**
(43) Date of publication of application: **14.10.2026**
(21) Application number: 25169119.2
(22) Date of filing: 08.04.2025
(51) Int. Cl.: H02K 1/24, H02K 3/52, H02K 11/01

(54) **ROTOR FOR A SYNCHRONOUS MACHINE**

(71) Applicant: ABB SCHWEIZ AG, 5400 Baden (CH)
(72) Inventor: GROP, Henrik, 722 16 Västerås (SE); NIEMELÄ, Elvira, 723 56 Västerås (SE); BAIDAR, Binaya, 722 10 Västerås (SE); BIASION, Marco, 722 23 Västerås (SE); LINDELL, David, 126 26 Hägersten (SE); JOHANSSON, Erik, 722 45 Västerås (SE); ZHAO, Su, 723 56 Västerås (SE); PAULSSON, Göran, 725 91 Västerås (SE)
(74) Representative: Kransell & Wennborg KB

(57) **Abstract**

A rotor (5) for a synchronous machine (1) comprising: a rotor core (7) having a longitudinal centre axis (A), and a plurality of salient poles (9), each comprising a solid metal pole shoe (11) mounted to the rotor core (7) and forming a radially outermost part of the respective salient pole (9), wherein each pole shoe (11) has a pole shoe body (13) provided with a longitudinal slit (17) principally extending in a direction parallel with the longitudinal centre axis (A), each pole shoe (11) comprising a metal bar (19) arranged in the slit (17), wherein each metal bar (19) comprises, or consists of, electrically conducting non-ferromagnetic material partly forming part of the radially outermost surface of the pole shoe (11), and wherein the electrically conducting non-ferromagnetic material has a lower DC resistivity than the pole shoe body (13).

## Description

### TECHNICAL FIELD

The present disclosure generally relates to rotors of synchronous machines, to synchronous machines, and to electrical machine systems comprising a synchronous machine driven by a load commutated inverter (LCI).

### BACKGROUND

LCI operation of medium-voltage solid-pole synchronous machines causes large losses on the rotor surface that are difficult to cool away effectively. This leads to local elevated temperatures in so called hot spots. The hot spot temperature of the rotor surface is often the limiting design temperature for such a machine nowadays. This applies to motors designed for safe areas but is even more critical in hazardous areas, especially in zone 1 hazardous areas. The worst-case scenario could be gas ignition if the hot spot is not kept under control in the design phase of the motor. For safe area machines, it is typically not the hot spot itself that is of concern, but rather the heat transfer from this hot spot to the field winding insulation. Elevated temperatures in the field winding insulation reduce the lifetime expectancy of the motor. The overall result of this is that the output power for a given LCI-driven motor is today limited by the losses occurring at the rotor pole shoe surface.

### SUMMARY

It may be noted that in contrast to LCI-driven solid-pole synchronous machines, laminated rotor machines, i.e., machines that have rotors formed of laminated metal sheets, may have a damper winding fitted into the outer perimeter of the rotor. In this case, the high-frequency losses end up in this winding. In solid metal pole shoe machines driven by an LCI, the damping effect is "built in" the rotor constructions via eddy currents being allowed to flow freely in the rotor. Unfortunately, the high-frequency currents flow in a very thin skin on the rotor surface, making the effective resistance very high, which causes the losses to be large.

In view of the above, an object of the present disclosure is to provide a rotor for a synchronous machine which solves, or at least mitigates, the problems of the prior art.

There is hence according to a first aspect of the present disclosure provided a rotor for a synchronous machine comprising: a rotor core having a longitudinal centre axis, and a plurality of salient poles, each comprising a pole shoe mounted to the rotor core and forming a radially outermost part of the respective salient pole, wherein each pole shoe has a pole shoe body provided with a longitudinal slit principally extending in a direction parallel with the longitudinal centre axis, each pole shoe comprising a metal bar arranged in the slit, wherein each metal bar comprises, or consists of, electrically conducting non-ferromagnetic material partly forming a radially outermost surface of the pole shoe, and wherein the electrically conducting non-ferromagnetic material has a lower DC resistivity than the pole shoe body.

The losses that would otherwise be generated in the radially outermost surface may thus be substantially reduced. As a result, the output power of a synchronous machine comprising the rotor, and driven by an LCI, may be increased.

The DC resistivity of the electrically conducting non-ferromagnetic material is lower than that of the pole shoe body at 150°C.

According to one embodiment, for each salient pole, the slit is arranged offset, in a circumferential direction of the rotor core, from a symmetry plane, containing the longitudinal centre axis and a longitudinal centre line of the respective salient pole.

The hot spot is arranged offset in the circumferential direction from the symmetry plane. The hot spot location is dependent on whether an LCI driven synchronous machine is operated as a motor or a generator.

In case an LCI driven synchronous machine comprising the rotor of the first aspect is to be operated as a motor, the metal bar of each pole shoe is arranged such that it is located on the lagging side of the pole shoe during rotation of the rotor core. This is advantageous because the hot spot always occurs on the lagging side of the pole shoes when an LCI driven synchronous machine is operated as a motor.

In case an LCI-drive synchronous machine comprising the rotor of the first aspect is to be operated as a generator, the metal bar of each pole shoe is arranged such that it is located on the leading side of the pole shoes during rotation of the rotor core. This is advantageous because the hot spot always occurs on the leading side of the pole shoes when an LCI driven synchronous machine is operated as a generator.

According to one embodiment the electrically conducting non-ferromagnetic material has lower DC resistivity than iron.

According to one embodiment the electrically conducting non-ferromagnetic material is copper or a copper alloy.

According to one embodiment each pole shoe body is made of a single piece of steel.

According to one embodiment each metal bar comprises a base on which the electrically conducting non-ferromagnetic material is arranged, the base being arranged radially inwards of the electrically conducting non-ferromagnetic material.

According to one embodiment the electrically conducting non-ferromagnetic material is bonded to the base.

The bonding may for example be mechanical bonding using e.g. bolts, it may be chemical, by thermal fusion such as welding, brazing, or soldering, or thermal solid-state bonding such as friction stir welding, or by crimping.

In one example, the metal bar may consist of the electrically conducting non-ferromagnetic material, which may be casted or sintered in the slit. In another example, the electrically conducting non-ferromagnetic material may be casted or sintered on the base.

According to one embodiment each base is made of the same material as the pole shoe body. This minimises the amount of electrically conducting non-ferromagnetic material needed and lowers the requirements on mechanical strength of the electrically conducting non-ferromagnetic material. It furthermore allows for better control of the manufacturing to minimise unwanted heating or other problems associated with thermal joining of dissimilar materials. Moreover, it reduces issues regarding thermal expansion mismatch between the metal bar and the pole shoe body.

According to one embodiment each base is interlocked in a radial direction with a respective pole shoe body.

According to one embodiment each pole shoe has a centre section located in the middle between a first axial end and a second axial end of the pole shoe, and wherein the electrically conducting non-ferromagnetic material in the slit extends along the centre section.

According to one embodiment each pole shoe body comprises a single slit.

There is according to a second aspect of the present disclosure provided a synchronous machine comprising a rotor of the first aspect.

There is according to a third aspect of the present disclosure provided an electrical machine system comprising: a synchronous machine of the second aspect, and an LCI configured to drive the synchronous machine.

According to one embodiment the LCI is an N-pulse LCI, with N being a positive integer multiple of 6, and wherein the electrically conducting non-ferromagnetic material has a radial thickness of at least half a skin depth of a largest loss harmonic of the N-pulse LCI contributing to the largest losses on the rotor at a temperature of 150°C at the lowest occurring frequency in normal operation of the LCI and the synchronous machine.

150°C is a typical operating temperature reached when the LCI driven synchronous machine is in operation.

In one example, the electrically conducting non-ferromagnetic material has a radial thickness of at least 2/3 of, 3/4 of, or one skin depth of the largest loss harmonic of the N-pulse LCI contributing to the largest losses on the rotor at a temperature of 150°C at the lowest occurring frequency in normal operation of the LCI and the synchronous machine.

According to one embodiment the electrically conducting non-ferromagnetic material provides a greater skin depth for the largest loss harmonic than the pole shoe body.

According to one embodiment the synchronous machine is rated for at least 20 MW. The synchronous machine may for example be rated for at least 30 MW.

The synchronous machine may be a medium voltage synchronous machine. The rated voltage of the LCI driven synchronous machine may thus be in a range of 1-30 kV, such as 1-15 kV.

The synchronous machine may be operated as a motor or a generator.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a longitudinal section of a synchronous machine, connected to an LCI;
Fig. 2 shows a perspective view of an example of a rotor of the synchronous machine in Fig. 1;
Fig. 3 is a cross-section of a rotor;
Figs 4-5 each shows an example of a single salient pole of a rotor; and
Fig. 6 is a longitudinal section of a pole shoe prior to mounting to the rotor core.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

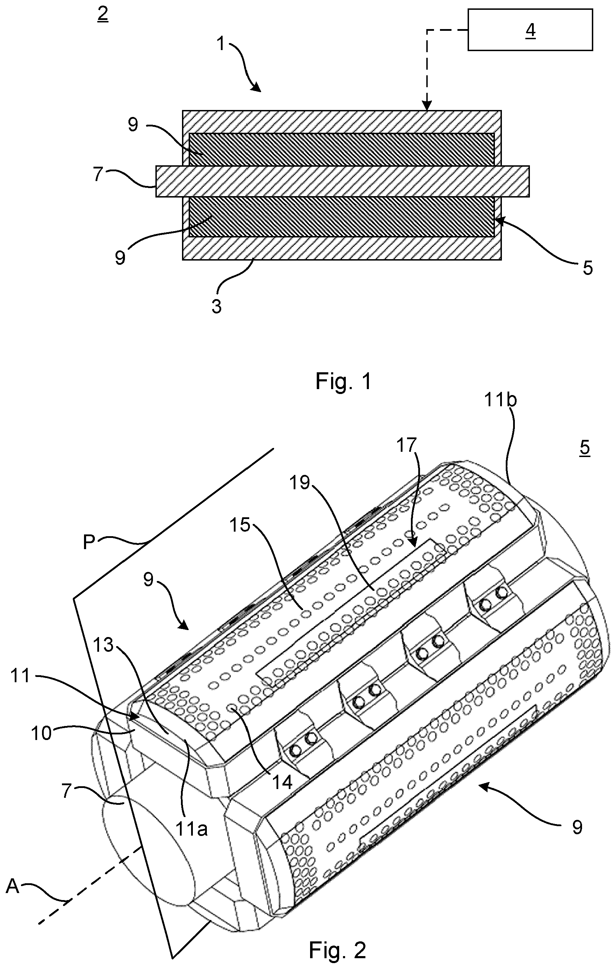

Fig. 1 schematically shows a longitudinal section of an example of a synchronous machine 1. Fig. 1 also shows an LCI 4 configured to drive the synchronous machine 1. The synchronous machine 1 and the LCI 4 form an electrical machine system 2.

The synchronous machine 1 comprises a stator 3.

The synchronous machine 1 comprises a rotor 5.

The rotor 5 is rotatably arranged in the stator 3.

The rotor 5 is arranged to electromagnetically interact with the stator 3.

The rotor 5 comprises a rotor core 7.

The rotor 5 further comprises a plurality of salient poles 9 attached to the rotor core 7.

The LCI 4 is an N-pulse LCI, with N being a positive integer multiple of 6. The LCI 4 may for example be a 6-pulse or a 12-pulse LCI.

Turning now to Fig. 2 an example of the rotor 5 is shown in perspective view. The example shows that the rotor 5 is a 4-pole rotor, but it is to be appreciated that the rotor 5 could have any even number of salient poles 9, such as six or eight.

Each salient pole 9 comprises a respective pole shoe 11, each pole shoe 11 having a pole shoe body 13. The pole shoe body 13 is made of a single piece of metal such as steel.

Each pole shoe 11 is mounted on the rotor core 7.

Each pole shoe 11 form a radially outermost part of the respective salient pole 9.

The pole shoes 11 each define a radially outermost surface 15 of the respective salient pole 9.

Each pole shoe body 13 is provided with a longitudinal slit, or groove, 17 principally extending in a direction parallel with a longitudinal centre axis A of the rotor core 7. The slits 17 may be arranged completely parallel with the longitudinal centre axis A, or they may be arranged at an angle of at most 5° in relation to the longitudinal centre axis A. The slit 17 may have a constant width, i.e., a constant dimension in the circumferential direction of the rotor 5, along its length, or the width may vary.

Further, each pole shoe 11 comprises a metal bar 19 arranged in the slit 17. The metal bar 19 comprises or consists of electrically conducting non-ferromagnetic material.

The electrically conducting non-ferromagnetic material has a lower DC resistivity than the pole shoe body 13. Thus, the electrically conducting non-ferromagnetic material has a lower DC resistivity than the material of the pole shoe body 13. The DC resistivity is considered at 150°C.

The electrically conducting non-ferromagnetic material may for example be copper, e.g., pure copper, or a copper alloy.

The electrically conducting non-ferromagnetic material forms a radially outermost surface of the metal bar 19. Since the metal bar 19 is arranged in the slit 17, the electrically conducting non-ferromagnetic material is an external surface of the pole shoe 11.

The outer surface of the metal bar 19 may be flush, or in level, with the radially outermost surface 15 surrounding the metal bar 19.

For each salient pole 9, the slit 17, and thus the metal bar 19, is arranged offset, in a circumferential direction of the rotor core 7, from a symmetry plane P, containing the longitudinal centre axis A of the rotor core 7 and a longitudinal centre line of the salient pole 9. Hot spots would appear circumferentially offset from the symmetry plane P without the electrically conducting non-ferromagnetic material arranged in the slit 17. The slit 17 is arranged offset in the circumferential direction on the lagging side if the synchronous machine 1 is to be operated as a motor and on the leading side if the synchronous machine 1 is to be operated as a generator. For synchronous machines 1 that are to be operated both as motor and generator, in some examples each salient pole 9 may comprise two slits 17, in which a respective metal bar 19 is arranged, each slit 17 being arranged circumferentially offset at a respective side of the symmetry plane P. If the synchronous machine 1 is to be operated only as either a motor or a generator, each salient pole 9 may comprise a single slit 17.

Each pole shoe 11 has a first axial end 11a and a second axial end 11b opposite to the first axial end 11a. The axial ends 11a, 11b are longitudinal axial ends of the pole shoes 11.

Each pole shoe 11 has a centre section located in the middle between the first axial end 11a and the second axial end 11b. The slit 17 extends along the centre section. The metal bar 19 and thus the electrically conducting non-ferromagnetic material also extends along the centre section.

If the synchronous machine 1 is symmetrically cooled, i.e., if cooling is provided at both axial ends 11a, 11b of the pole shoes 11, then the slit 17 may be arranged longitudinally axially symmetrically centred on the respective pole shoe 11.

If the synchronous machine 1 is asymmetrically cooled i.e., if cooling is provided at only one of the axial ends 11a, 11b of the pole shoes 11, then the slit 17 may be arranged longitudinally axially offset in relation to a centre of the pole shoe 11, with the slit 17 arranged closer to that axial end 11a, 11b that suffers from worse cooling.

In one example, the slit 17 and the metal bar 19 of each pole shoe 11 may extend along the entire axial length of the pole shoe 11, i.e., from the first axial end 11a to the second axial end 11b.

The electrically conducting non-ferromagnetic material may have a radial thickness of at least half a skin depth of a largest loss harmonic of the N-pulse LCI contributing to the largest losses on the rotor at a temperature of 150°C at the lowest occurring frequency in normal operation of the LCI 4 and the synchronous machine 1.

For example, if N=12, i.e., the LCI 4 is a 12-pulse LCI, and the fundamental frequency of the LCI 4 is 50 Hz, the largest loss harmonic contributing to the largest losses has a frequency of 600 Hz. In this case, the skin depth at a temperature of 150°C is 3.26 mm if the electrically conducting non-ferromagnetic material consists of pure copper. This means that in this example the radial thickness of the electrically conducting non-ferromagnetic material is at least 1.63 mm. If the fundamental frequency of the LCI 4 instead is 30 Hz, which may be the lowest occurring frequency in normal operation of the LCI 4 and the synchronous machine 1, the skin depth is 4.2 mm for pure copper at 150°C. This means that in this example the radial thickness of the electrically conducting non-ferromagnetic material is at least 2.1mm.

Generally, the skin depth δ for the electrically conducting non-ferromagnetic material is defined by the equation (1) below: $δ = √ \overline{\frac{2 ρ}{2 π ⋅ N ⋅ f ⋅ {μ}_{0} ⋅ {μ}_{r}}}$ where *ρ* is the resistivity of copper at 150°C, f is the fundamental frequency, *µ*₀ is the permeability of free space, and *µᵣ* is the relative permeability of the electrically conducting non-ferromagnetic material.

The electrically conducting non-ferromagnetic material provides a greater skin depth for the largest loss harmonic discussed above than the pole shoe body 13. This is because of the material differences of the pole shoe body 13 and the electrically conducting non-ferromagnetic material.

The radial thickness of the electrically conducting non-ferromagnetic material may be several times smaller than a width of the electrically conducting non-ferromagnetic material. In one example, the width, which is the largest dimension of the electrically conducting non-ferromagnetic material in the circumferential direction of the rotor 5, may be at least an order of 10 larger than the radial thickness.

The synchronous machine 1 comprises field windings 10 provided on the salient poles 9, located radially inwards of the pole shoes 11.

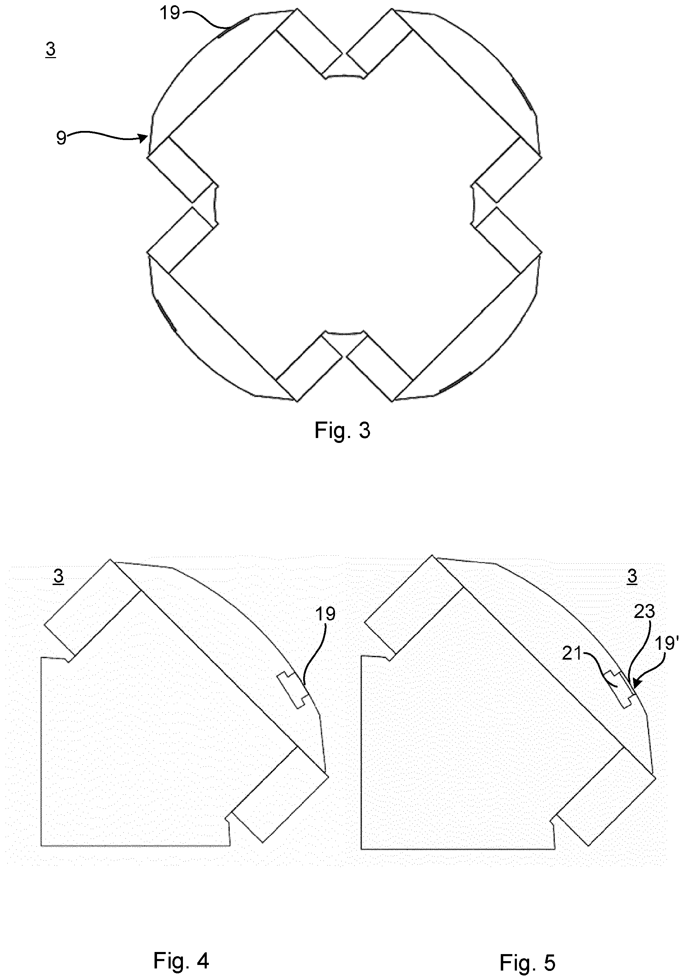

The metal bar 19 may have a number of different configurations, of which examples will be provided with reference to Figs 3-5.

Fig. 3 schematically shows a cross-section of the rotor 5 at an axial position where the metal bars 19 are provided. According to the example, the metal bars 19 consists of the electrically conducting non-ferromagnetic material.

The metal bars 19 may for example be thermally bonded to the respective pole shoe body 13. The thermal bonding may example be by brazing, welding, or soldering of the electrically conducting non-ferromagnetic material to the pole shoe body 13.

In the example in Fig. 4, the metal bar 19 is interlocked in the radial direction with the slit 17. The metal bar 19 may be anchored with the slit 17. For example, the slit 17 may have an upside-down or inverted T-shape or dovetail-shape in cross-section and the metal bar 19 may have a corresponding T-shaped or dovetail-shaped cross-section. The slit 17 may during manufacturing in this case be open from an end of the pole shoe body 13 such that the metal bar 19 may be slid into the slit 17. This opening may afterwards be closed off e.g., by means of and end piece bolted or otherwise attached to the pole shoe body 13 at one or both longitudinal axial ends of the metal bar 19 arranged in the slit 17, thus axially locking the position of the metal bar 19.

Fig. 5 shows another example of a metal bar. The metal bar 19' comprises a base 21 on which the electrically conducting non-ferromagnetic material 23 is arranged. The base 21 is arranged radially inwards of the electrically conducting non-ferromagnetic material 23. The base 21 may have a larger width than the electrically conducting non-ferromagnetic material 23. The base 21 may be interlocked in the radial direction with the slit 17. For example, the slit 17 may have an upside-down or inverted T-shape or dovetail shape in cross-section and the metal bar 19' may have a corresponding T-shaped or dovetail shaped cross-section. The slit 17 may during manufacturing in this case be open from an end of the pole shoe body 13 such that the metal bar 19' may be slid into the slit 17. This opening may afterwards be closed off e.g., by means of and end piece bolted or otherwise attached to the pole shoe body 13 at one or both longitudinal axial ends of the metal bar 19' arranged in the slit 17, thus axially locking the position of the metal bar 19'.

The electrically conducting non-ferromagnetic material 23 may in this example for instance consist of or comprise copper, such as pure copper, a copper alloy, austenitic stainless steel, nickel, or a nickel alloy.

The electrically conducting non-ferromagnetic material 23 may be bonded to the base 21. The bonding may for example be mechanical bonding using e.g. bolts, it may be chemical, by thermal fusion such as welding, brazing, or soldering, or thermal solid-state such as friction stir welding, or by crimping.

Electrically conductive grease may be provided between the metal bar 19' and the pole shoe body 13. Thermal conductivity and electrical conductivity between the metal bar 19' and the pole shoe body 13 may thus be increased.

In one example, each base 21 is made of the same material as the pole shoe body 13. Thus, for example, the base 21 and the pole shoe body 13 may be made of steel, for example the same steel type.

In one example, the electrically conducting non-ferromagnetic material 23 may protrude radially from the pole shoe body 13 and thus extend into the airgap between the rotor 5 and the stator 3.

In one example, the long sides of the metal bar 19' may be coated with a soft and highly conductive material for interfacing with the pole shoe body 13. This material may for example be silver. The material may for example be applied by means of electroplating.

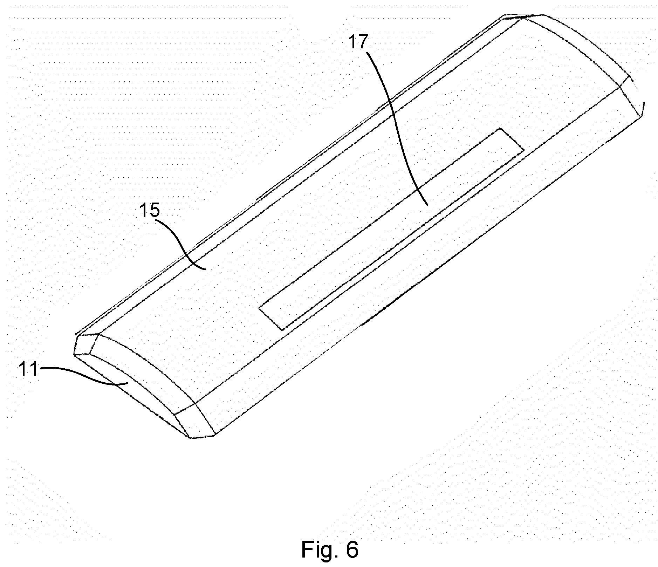

An example of manufacturing the rotor 5 will now be described with reference to Figs 2 and 6.

In one example involving brazing, in a first step M pole shoe bodies are provided, M being the number of poles of the rotor 5. Next, a slit 17 is machined in the radially outermost surface of each pole shoe body 13, circumferentially offset from the symmetry plane P in an expected hot spot region of the radial outer surface 15 of the pole shoe 11, as shown in Fig. 6. The electrically conducting non-ferromagnetic material is then placed in the slit 17 and brazed to the pole shoe body 13. After that, a plurality of openings ₁₄ are bored in the radial outer surface 15, including in the electrically conducting non-ferromagnetic material. The pole shoe body 13 is then attached to the rotor core 7 by means of bolts in the plurality of openings 14. The bolts in the openings 14 in the electrically conducting non-ferromagnetic material may be countersunk radially below the electrically conducting non-ferromagnetic material to only hold the pole shoe body 13. The electrically conducting non-ferromagnetic material may thus be held only by the brazing.

It has been found that brazing is an especially suitable way of preparing the pole shoes 11.

The long sides of the electrically conducting non-ferromagnetic material may in some examples be provided with a coating compatible for brazing with the material of the pole shoe body 13.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Rotor (5) for a synchronous machine (1) comprising:
a rotor core (7) having a longitudinal centre axis (A), and
a plurality of salient poles (9), each comprising a pole shoe (11) mounted to the rotor core (7) and forming a radially outermost part of the respective salient pole (9),
wherein each pole shoe (11) has a pole shoe body (13) provided with a longitudinal slit (17) principally extending in a direction parallel with the longitudinal centre axis (A),
each pole shoe (11) comprising a metal bar (19; 19') arranged in the slit (17), wherein each metal bar (19; 19') comprises, or consists of, electrically conducting non-ferromagnetic material (23) partly forming a radially outermost surface of the pole shoe (11), and wherein the electrically conducting non-ferromagnetic material (23) has a lower DC resistivity than the pole shoe body (13).

2. Rotor (5) as claimed in claim 1, wherein for each salient pole (9), the slit (17) is arranged offset, in a circumferential direction of the rotor core (7), from a symmetry plane (P) containing the longitudinal centre axis (A) and a longitudinal centre line of the respective salient pole (9).

3. Rotor (5) as claimed in any of the preceding claims, wherein the electrically conducting non-ferromagnetic material (23) has lower DC resistivity than iron.

4. Rotor (5) as claimed in any of the preceding claims, wherein the electrically conducting non-ferromagnetic material (23) is copper or a copper alloy.

5. Rotor (5) as claimed in any of the preceding claims, wherein each pole shoe body (13) is made of a single piece of steel.

6. Rotor (5) as claimed in any of the preceding claims, wherein each metal bar (19') comprises a base (21) on which the electrically conducting non-ferromagnetic material (23) is arranged, the base (21) being arranged radially inwards of the electrically conducting non-ferromagnetic material (23).

7. Rotor (5) as claimed in claim 6, wherein the electrically conducting non-ferromagnetic material (23) is bonded to the base (21).

8. Rotor (5) as claimed in claim 6 or 7, wherein each base (21) is made of the same material as the pole shoe body (13).

9. Rotor (5) as claimed in any of claims 6-8, wherein each base (21) is interlocked in a radial direction with a respective pole shoe body (13).

10. Rotor (5) as claimed in any of the preceding claims, wherein each pole shoe (11) has a centre section located in the middle between a first axial end (11a) and a second axial end (11b) of the pole shoe (11), and wherein the electrically conducting non-ferromagnetic material (23) in the slit (17) extends along the centre section.

11. Rotor (5) as claimed in any of the preceding claims, wherein each pole shoe body (13) comprises a single slit (17).

12. Synchronous machine (1) comprising a rotor as claimed in any of the preceding claims.

13. Electrical machine system (2) comprising:
a synchronous machine (1) as claimed in claim 12, and
an LCI (4) configured to drive the synchronous machine (1).

14. Electrical machine system (2) as claimed in claim 13, wherein the LCI (4) is an N-pulse LCI, with N being a positive integer multiple of 6, and wherein the electrically conducting non-ferromagnetic material (23) has a radial thickness of at least half a skin depth of a largest loss harmonic of the N-pulse LCI contributing to the largest losses on the rotor (5) at a temperature of 150°C at the lowest occurring frequency in normal operation of the LCI (4) and the synchronous machine (1).

15. Electrical machine system (2) as claimed in claim 14, wherein the electrically conducting non-ferromagnetic material (23) provides a greater skin depth for the largest loss harmonic than the pole shoe body (13).
